Europäisches Patentamt

(19) European Patent Office

Office européen des brevets

(11) Publication number: **0 012 599**
**B1**

(12) **EUROPEAN PATENT SPECIFICATION**

(45) Date of publication of patent specification: **25.05.83**

(51) Int. Cl.³: **C 08 K 9/10, C 09 C 3/08**

(21) Application number: **79302857.2**

(22) Date of filing: **12.12.79**

(54) **Method of treating mica.**

(30) Priority: **18.12.78 US 970821**

(43) Date of publication of application:
**25.06.80 Bulletin 80/13**

(45) Publication of the grant of the patent:
**25.05.83 Bulletin 83/21**

(84) Designated Contracting States:
**BE DE FR GB IT NL SE**

(56) References cited:
    **CH - A - 404 191**
    **FR - A - 940 108**
    **FR - A - 2 385 768**
    **GB - A - 871 411**

    **CHEMICAL ABSTRACTS, vol. 87, 1977, page
    37, abstract 202656a
    Columbus, Ohio, USA**

(73) Proprietor: **FORD MOTOR COMPANY LIMITED
Eagle Way
Brentwood Essex CM13 3BW (GB)**
(84) **GB**
(73) Proprietor: **FORD-WERKE AKTIENGESELLSCHAFT
Ottoplatz 2 Postfach 21 03 69
D-5000 Köln 21 (DE)**
(84) **DE**
(73) Proprietor: **FORD FRANCE SOCIETE ANONYME
344 Avenue Napoléon Bonaparte B.P. 307
F-92506 Rueil Malmaison Cedex (FR)**
(84) **FR**
(73) Proprietor: **Ford Motor Company
The American Road
Dearborn MI 48121 (US)**
(84) **BE IT NL SE**

(72) Inventor: **Bartosiewicz, Leslie
1899 Woodside Drive
Dearborn Michigan 48125 (US)**

(74) Representative: **Drakeford, Robert William et al,
Ford Motor Company Limited 15/448, Research &
Engineering Centre Laindon
Basildon Essex SS15 6EE (GB)**

Courier Press, Leamington Spa, England.

This invention relates to a method of treating mica.

It is known from GB—A—871411 to improve the dispersibility of powdered mica by mixing mica powder with an organic solvent of a saturated fatty acid, and then removing the solvent. It is also known that certain chlorinated hydrocarbons can act as coupling agent for mica in melt-forming resins. One prior art method that is especially suitable method involves mixing mica particles with chlorinated paraffins in powder form at elavated temperature to yield a coating on the mica. Although this method serves to provide coated mica particles which are useful as reinforcing materials for melt forming resins, it has the disadvantage that relatively high temperatures must be used.

According to the present invention, there is provided a method of treating mica which comprises enveloping mica flakes with a solid chlorinated hydrocarbon in the presence of a liquid dispersant, and drying the mica flakes.

By exposing mica particles to a fluid medium that comprises chlorinated hydrocarbon, active sites at the edges of the mica flakes rapidly and preferentially take on a coating that beneficially aids reinforcement by the coated mica in melt forming resin such as polypropylene. When sufficient fluid is employed to surround each of the flakes, a macroscopically uniform distribution of chlorinated hydrocarbon in the mica filler is achieved.

Although the mica filler coated as above can be made macroscopically uniform with respect to the chlorinated hydrocarbon, microscopic examination of dried flakes using X-ray techniques shows that chlorine concentration is highest at the edges of the flakes under conditions of this invention. Apparently, the edges of the flakes, due to many platelike layers provide more surface area for infiltration by the fluid containing the chlorinated hydrocarbon.

Advantageously, treating mica filler in accordance with this invention to achieve macroscopic uniformity of coating thereon is rapid and does not require highly elevated temperatures. This quick, low temperature manner of coating therefore is not likely to permit excessive evolution of hydrochloric acid from highly chlorinated hydrocarbons thereby reducing risk of excessive wear to coating apparatus. Moreover, the fluid medium used in the coating operation may be reclaimed and reused in subsequent coating operations. Still further, this coating method is compatible with further coating techniques as by tumbling at elevated temperature the peripherially coated flakes of this invention and with additional chlorinated hydrocarbon, if desired.

The mica that may be desirably employed in this invention includes commercially available mica filler materials comprising, for example, muscovite, biotite and phlogophite mica mineral. Mica that comprises principally by weight phlogopite is preferred, e.g. Marietta International Suzorite Mica.

The mica filler is available in a variety of particle sizes and such size is not an important criteria for this invention, although mica that passes through a 20 mesh screen (sieve opening 0,841 mm) and is retained on a 325 mesh screen (sieve opening 0,044 mm) shows particular advantage with respect to compounding with melt forming resins and chlorinated hydrocarbon of this invention.

The shape of mica filler particles is platelike or flake form as is well known. One characterization of mica that is sometimes used is flake aspect ratio or average diameter of flake over thickness. The aspect ratio of mica normally suitable herein can be termed unclassified in the sense that a distribution of flakes with varying aspect ratios are within the filler. Mica that has narrow aspect ratios, however, will also be suitable for use in this invention.

A preferred class of chlorinated hydrocarbons for use in this invention is chlorinated aliphatic hydrocarbons having in excess of 50% by weight chlorine, e.g. chlorinated paraffin waxes. Especially preferred are chlorinated paraffin having from 50 to 80% preferably 60—75% by weight chlorine that are commercially available, e.g. under the registered trade marks Chlorez 700, 760 and Chlorowax 70 and the like, these chlorinated waxes are normally available in powder form and have molecular weights (number average) in a range 400—3000, usually 500—3000, desirably 800—1500 for this invention.

In one embodiment of this invention, mica filler and powdered chlorinated hydrocarbon are gently tumbled together to yield a powdery blend whereupon liquid dispersant for the chlorinated hydrocarbon is added in an amount sufficient to wet the mica particles. Thereafter, the liquid is removed as by drying the flakes to leave a coated mica. The weight ratio of chlorinated hydrocarbon to mica in this embodiment is desirably 0.5—5:100.

Liquid dispersants suitable for use herein include a diverse group of organic materials that can disperse as dissolve or suspend chlorinated hydrocarbons including, for example, aliphatic and aromatic hydrocarbons, chlorinated hydrocarbons, ethers and the like as well as mixtures of any of these such as benzene, chlorobenzene, methylene chloride, xylene, etc. The liquid dispersant preferably has a boiling point below 100°C. Aliphatic chlorides such as methylene chloride are found especially suitable, particularly in view of its low boiling point and inflamability.

In another embodiment, the mica filler is passed through a fluid medium comprising chlorinated hydrocarbon and liquid dispersant thereof whereupon the mica flakes may be removed from the medium and dried. Thus, for example, a tank containing aliphatic chloride as methylene chloride and dissolved chlorinated paraffin may serve to coat mica filler as it passes therethrough. After passage through the tank, the mica is conveniently dried at temperatures above 25°C and below 100°C, e.g. 50°C—60°C.

The following examples illustrate the invention. In the examples reference is made to the accompanying drawings, in which:—

Figures 1 and 2 are electron scanning micrographs using an X-ray mapping technique to identify chlorine on mica treated in accordance with this invention. The chlorine is shown as light dots.

Figures 3 and 4 are conventional electron scanning micrographs using secondary electron imaging technique of mica flakes shown in Figures 1 and 2, respectively.

Figures 5 and 6 are also electron scanning micrographs illustrating untreated mica flakes using X-ray mapping for chlorine and secondary electron techniques, respectively.

## Example 1

A dry mixture of tumbler mixed mica that is Marietta International Suzorite Mica 60-S (10,000 parts by weight) and Chlorez 700 powder (200 parts by weight) is prepared by gently tumbling together for about two minutes. ("Suzorite" is a registered trade mark.) The dry mixture is formed into a low density slurry by admixing methylene chloride (1000 parts by weight) with agitation for about one minute. The slurried mica particles are placed in an oven maintained at approximately 38°C to dry the mica flakes in one minute.

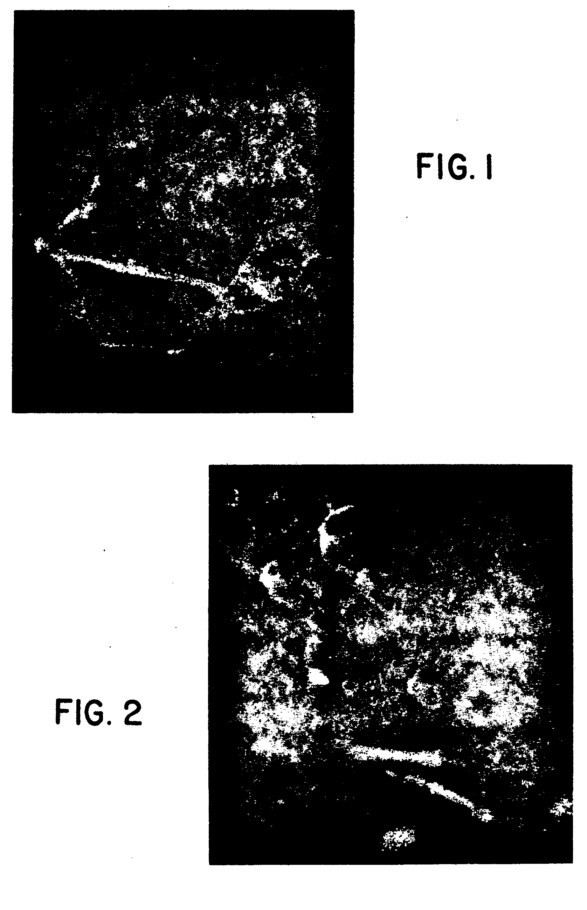

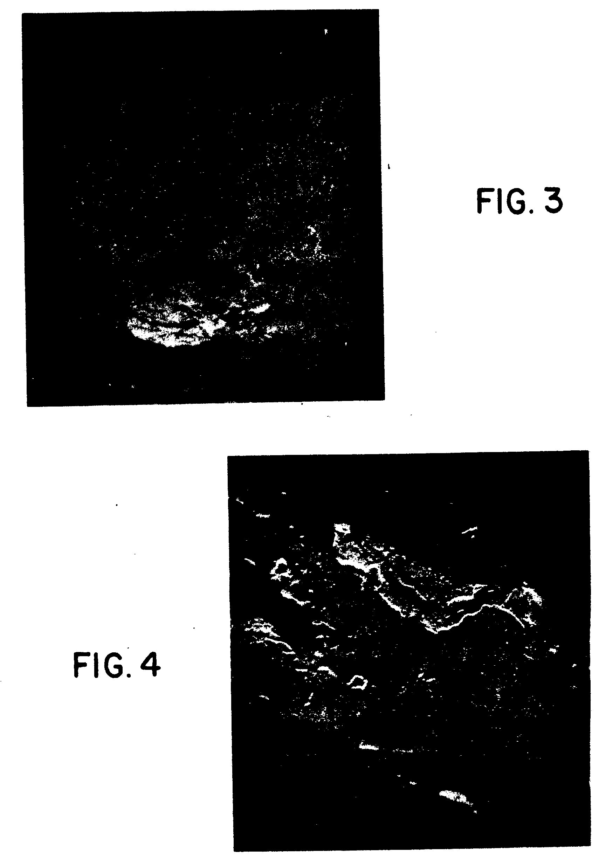

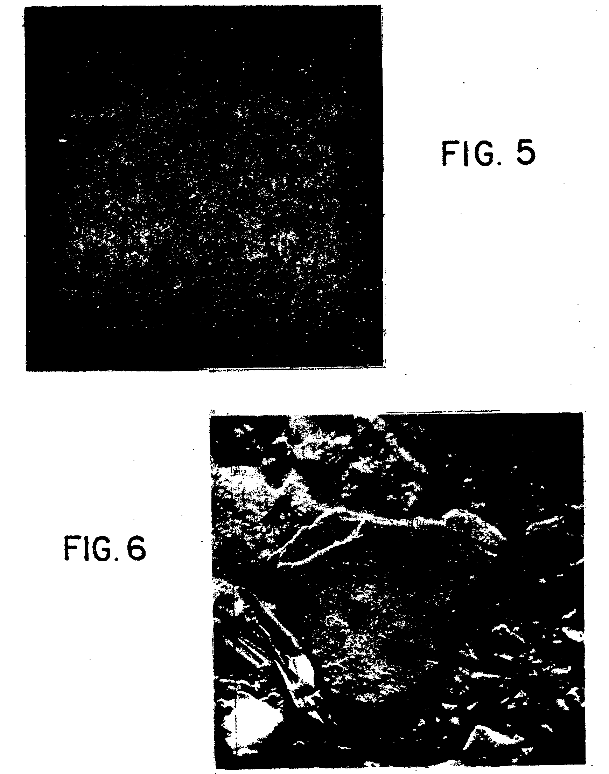

Figures 1 and 2 are scanning electron micrographs that show by X-ray mapping chlorine locations (dots) on mica flakes treated as above. Figures 3 and 4 are conventional (secondary electron) images of the same flakes, respectively as in Figures 1 and 2 at the same enlargement of 200X. A comparison of the micrographs illustrates the higher chlorine concentration at the edges of the mica flakes. Figures 5 and 6 illustrate untreated mica by X-ray mapping for chlorine (dots are random noise signals of the system) and also conventional secondary electron image, enlarged 300 times.

## Example 2

The procedures of Example 1 are followed except that the methylene chloride is replaced with a 1:1 mixture of toluene and benzene. Similar results are obtained.

## Example 3

The procedures of Example 1 are followed except that the methylene chloride is replaced with n-hexane. Similar results are obtained.

## Example 4

Using a Welding Engineers 5 cm (2.0″) Twin-Screw Extruder equal parts by weight of Gulk Polypropylene 6420 MHP and coated mica prepared as in Example 1 are compounded.

The temperature of the extruder is maintained at 227°C (440°F) and the polypropylene continuously introduced followed by continuous starve feed introduction of coated mica particles. The twin screws are counterrotating and non-intermeshing and a vacuum of approx. 75 kPa (22 inches 4 g) is maintained. The resin becomes molten after passage of about 20 cm (8″) along the extruder. The rate of addition yields 272 kg/h (600 lb./h) of compounded product which is sent through a strand die to provide strands about 0.6 cm (1/4″) or less which are thereafter cooled and diced into pellets. The strands exit the extruder at a temperature of about 232°C (450°F). The elapsed time between introducing the resin and exiting of the strands from the extruder is within 15 seconds. The pellets are molded into standard test bars by injecting at 4140 kPa (600 psi) and 220°C (428°F). The resulting bars had good reinforcement properties.

## Example 5

The procedures of Example 4 are followed except that mica treated as in Example 2 herein is used. Again desirable reinforcement of polypropylene is seen when resultant ASTM sample bars are evaluated.

## Example 6

The procedures of Example 1 are followed except that the Chlorez 700 is replaced by a mixture of Chlorowax 70 and Chlorez 760. Similar results are obtained.

## Example 7

Using the quantities of Chlorez 700, Suzorite 60-S mica and methylene chloride set forth in Example 1, the mica flakes and Chlorez 700 are genetly tumbled to provide a mixing and placed in a double bottom container that is fitted with a screen of appropriate mesh and slidable bottom. The methylene chloride is added to the mica and Chlorez 700 on the screen and left to stand for about two minutes whereupon the slidable bottom is removed and the liquid collected below. The mica is dryed and exhibits a desirable coating.

## Claims

1. A method of treating mica which comprises enveloping mica flakes with a solid chlorinated hydrocarbon in the presence of a liquid dispersant, and drying the mica flakes.

2. A method according to claim 1 wherein the mica flakes are enveloped in a fluid medium that comprises chlorinated hydrocarbon having 50—80% chlorine by weight and a molecular weight of from 400 to 3000 in a liquid dispersant therefor, and dried at a temperature above 25°C.

3. A method in accordance with Claim 1 or Claim 2 wherein the chlorinated hydrocarbon comprises chlorinated paraffin having from 60—75% by weight chlorine.

4. A method according to Claim 1, 2 or 3 wherein the liquid dispersant has a boiling point below 100°C.

5. A method in accordance with any one of Claims 1 to 4 wherein the liquid dispersant comprises a chlorinated aliphatic hydrocarbon.

6. A method in accordance with any one of claims 1 to 5 wherein the mica flakes are enveloped in the said fluid medium by tumbling the mica filler and chlorinated hydrocarbon together to provide a dry blend and wetting the dry blend with the liquid dispersant.

7. A method in accordance with claim 6 wherein the weight ratio of the chlorinated paraffin to mica in the dry blend is 0.5—5:100.

8. A method in accordance with any one of claims 1 to 7 wherein the mica flakes are dried at a temperature below 100°C.

## Revendications

1. Procédé de traitement du mica qui comprend l'enveloppement des paillettes de mica au moyen d'un hydrocarbure chloré solide en présence d'un dispersant liquide et le séchage des paillettes de mica.

2. Procédé suivant le revendication 1, dans lequel les paillettes de mica sont enveloppées dans un milieu fluide qui comprend un hydrocarbure chloré ayant une teneur en chlore de 50 à 80% en poids et un poids moléculaire de 400 à 3000 dans un dispersant liquide pour cet hydrocarbure chloré et sont séchées à une température de plus de 25°C.

3. Procédé suivant la revendication 1 ou 2, dans lequel l'hydrocarbure chloré comprend une paraffine chlorée ayant une teneur en chlore de 60 à 75% en poids.

4. Procédé suivant la revendication 1, 2 ou 3, dans lequel le dispersant liquide a un point d'ébullition inférieur à 100°C.

5. Procédé suivant l'une quelconque des revendications 1 à 4, dans lequel le dispersant liquide comprend un hydrocarbure aliphatique chloré.

6. Procédé suivant l'une quelconque des revendications 1 à 5, dans lequel les paillettes de mica sont enveloppées dans le milieu liquide par agitation de la charge de mica et de l'hydrocarbure chloré au tonneau ensemble pour la formation d'un mélange sec et par mouillage de ce mélange sec à l'aide du dispersant liquide.

7. Procédé suivant la revendication 6, dans lequel le rapport pondéral de la paraffine chlorée au mica dans le mélange sec est de 0,5 à 5:100.

8. Procédé suivant l'une quelconque des revendications 1 à 7, dans lequel les paillettes de mica sont séchées à une température inférieure à 100°C.

## Patentansprüche

1. Verfahren zum Behandeln von Glimmer, welches darin besteht, dass man Glimmerschuppen in Gegenwart eines flüssigen Dispergiermittels mit einem festen chlorierten Kohlenwasserstoff umhüllt und die Glimmerschuppen trocknet.

2. Verfahren nach Anspruch 1, worin die Glimmerschuppen in einem flüssigen, chlorierten Kohlenwasserstoff mit 50—80 Gew.-% Chlor und einem Molekulargewicht von 400 bis 3000 in einem flüssigen Dispergiermittel dafür enthaltenden Medium umhüllt und bei einer Temperatur oberhalb 25°C getrocknet werden.

3. Verfahren nach Anspruch 1 oder 2, worin der chlorierte Kohlenwasserstoff aus chloriertem Paraffin mit 60—75 Gew.-% Chlor besteht.

4. Verfahren nach Anspruch 1, 2 oder 3, worin das flüssige Dispergiermittel einen Siedepunkt unterhalb 100°C aufweist.

5. Verfahren nach einem der Ansprüche 1 bis 4, worin das flüssige Dispergiermittel aus einem chlorierten aliphatischen Kohlenwasserstoff besteht.

6. Verfahren nach einem der Ansprüche 1 bis 5, worin die Glimmerschuppen in dem besagten flüssigen Medium dadurch umhüllt werden, dass man den Glimmerfüllstoff und den chlorierten Kohlenwasserstoff miteinander zur Bildung eines trockenen Gemischs trommelt und dieses mit dem flüssigen Dispergiermittel benetzt.

7. Verfahren nach Anspruch 6, worin das Gewichtsverhältnis des chlorierten Paraffins zu Glimmer im trockenen Gemisch 0,5—5:100 beträgt.

8. Verfahren nach einem der Ansprüche 1 bis 7 worin die Glimmerschuppen bei einer Temperatur unterhalb 100°C getrocknet werden.

0 012 599

FIG. 1

FIG. 2

1

0 012 599

FIG. 3

FIG. 4

2

FIG. 5

FIG. 6